# EUROPÄISCHE PATENTSCHRIFT

(11) **EP 1 064 164 B1**
(45) Veröffentlichungstag und Bekanntmachung des Hinweises auf die Patenterteilung: **07.11.2001**
(21) Anmeldenummer: 99911683.3
(22) Anmeldetag: 18.02.1999
(51) Int. Cl.: B60J 10/10, B60J 7/12

(54) **DICHTUNGSPROFIL FÜR EIN KRAFTFAHRZEUG**
SEALING PROFILE FOR AN AUTOMOBILE
PROFILE D'ETANCHEITE POUR VEHICULE AUTOMOBILE

(30) Priorität: 14.03.1998 DE 29804548 U
(43) Veröffentlichungstag der Anmeldung: 03.01.2001
(73) Patentinhaber: METEOR GUMMIWERKE K.H. BÄDJE GMBH & CO., 31167 Bockenem (DE)
(72) Erfinder: ANDERS, Jens, D-31094 Marienhagen (DE)
(74) Vertreter: Kosel, Peter, Dipl.-Ing.
(86) Internationale Anmeldenummer: EP9901066
(87) Internationale Veröffentlichungsnummer: WO9947374

(56) Entgegenhaltungen:
- DE-C- 4 441 667
- DE-C- 4 441 669
- GB-A- 2 136 038
- US-A- 3 090 646

## Beschreibung

Die Erfindung betrifft ein Dichtungsprofil nach dem Oberbegriff des Anspruchs 1.

Bei einem bekannten Dichtungsprofil in der gattungsmäßen DE 44 41 669 C1 (Fig. 4) ist der Profilfuß keilförmig aus Moosgummi ausgebildet und weist einen Hohlraum auf. Der Dichtungsabschnitt ist als von dem ProfilfuB getrenntes Profil mit einem eigenen Fuß ausgebildet, der in einer zusätzlichen Aufnahmeöffnung des Karosserieteils verankert ist. Diese Konstruktion ist sowohl in der Herstellung als auch bei der Montage aufwendig.

Aus der DE 44 41 667 C1 ist es an sich bekannt, den Verdeckbezug um eine Kante eines Leichtmetallprofils herumzuziehen und mit einer Verdickung an seiner Längskante in eine erste Aufnahmenut einer zusätzlichen metallischen Halteschiene einzudrücken. In eine zweite Aufnahmenut der Halteschiene wird der Fuß eines Dichtungsprofils eingedrückt. Das Dichtungsprofil weist außerdem einen an den Fuß angeformten. schlauchförmigen Dichtungsabschnitt auf. Die Halteschiene wird anschließend mit dem Leichtmetallprofil verschraubt.

Aus der US 3 090 646 A ist es an sich bekannt, das Faltverdeck um eine Kante eines Metallprofils herumzuziehen und dort durch eine äußere metallische Zierleiste zu sichern. In die Längskante des Faltverdecks wird eine Vinylschnur eingenäht. Der so entstehende Kantenwulst wird samt einem Fuß eines Dichtungsprofils in eine hinterschnittene Nut des Metallprofils eingedrückt. In einen Hohlraum des Fußes wird zur Fixierung noch eine inkompressible Vinylschnur eingedrückt. An den Fuß sind zwei schlauchförmige Dichtungsabschnitte des Dichtungsprofils angeformt.

Bei einem an sich bekannten Dichtungsprofil (JP 07290955 A) weist der Strukturteil an seiner dem anklappbaren Halteschenkel gegenüberliegenden Kante einen weiteren, festen Halteschenkel auf. Das Dichtungsprofil wird in eine Halteschiene mit im wesentlichen Ω-förmigem Querschnitt so eingesetzt und eingedrückt, daß schließlich beide Halteschenkel in einer Aufnahmekammer des Halteprofils verriegelt sind.

Aus der DE 81 06 708 U1 ist es an sich bekannt, den Rand einer Dachinnenverkleidung um den Rand eines inneren Flanschabschnitts herumzuschlagen und in dieser Position durch eine aufgesteckte Kunststoffleiste mit einem Widerhaken zu fixieren.

Der Erfindung liegt die Aufgabe zugrunde, die Herstellung und Anbringung des Dichtabschnitts zu vereinfachen.

Diese Aufgabe ist durch die Merkmale des Anspruchs 1 gelöst. Vorzugsweise ist das Dichtungsprofil extrudiert, also in all seinen Bestandteilen in Längsrichtung durchgehend. Die Haltefläche des Profilfußes ermöglicht eine flächige, sichere Anlage des Randes des Verdeckstoffes und eine entsprechend gute Fixierung dieses Randes.

Die Merkmale der Ansprüche 2 oder 3 stellen eine günstige Befestigungsart für die Riegelleiste an dem Verdeckstoff oder einen vorteilhaften Werkstoff für die Riegelleiste dar.

Mit den Merkmalen des Anspruchs 4 lassen sich Bewegungen zwischen dem Dichtungsprofil und dem Karosserieteil auf ein Minimum begrenzen.

Gemäß Anspruch 5 läßt sich das Dichtungsprofil besonders günstig herstellen.

Diese und weitere Merkmale der Erfindung werden nachfolgend anhand der in den Zeichnungen dargestellten Ausführungsbeispiele näher erläutert. Es zeigt:
Fig. 1 einen Querschnitt durch ein Karosserieteil mit in dessen Aufnahmeöffung eingestecktem ProfilfuB und Rand eines Verdeckstoffes und
Fig. 2 einen Querschnitt durch einen Teil einer anderen Ausführungsform.

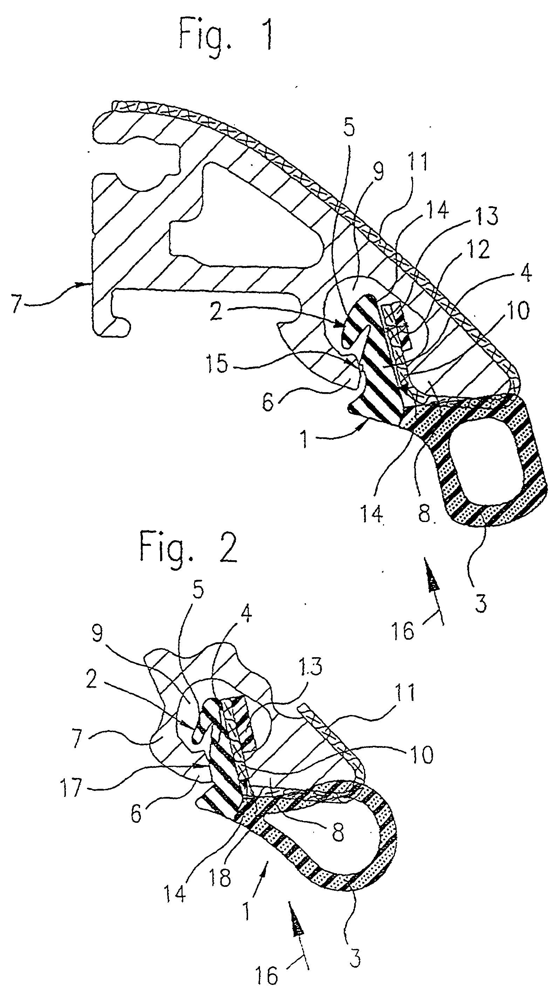

Gemäß Fig. 1 weist ein Dichtungsprofil 1 für ein Kraftfahrzeug einen ProfilfuB 2 und einen an dem Profilfuß 2 befestigten elastischen Dichtungsabschnitt 3 auf. Das Dichtungsprofil 1 besteht in an sich bekannter Weise aus wenigstens einem Elastomer, dessen Eigenschaften auf den jeweiligen Einsatzfall eingestellt sind. So kann z.B. der Profilfuß 2 aus einem härteren Elastomer als der Dichtungsabschnitt bestehen. Der Profilfuß 2 weist einen Strukturteil 4 und einen mit dem Strukturteil 4 einstückig ausgebildeten Halteschenkel 5 auf. Der Halteschenkel 5 ist zum Hintergreifen eines ersten Vorsprungs 6 eines Karosserieteils 7 sowie in Richtung auf den Strukturteil 4 rückfedernd anklappbar ausgebildet.

Dem ersten Vorsprung 6 liegt im Abstand ein zweiter Vorsprung 8 des Karosserieteils 7 gegenüber. Oberhalb der Vorsprünge 6, 8 setzt sich eine Aufnahmeöffnung 9 des Karosserieteils 7 fort.

In die Aufnahmeöffnung 9 ragt ein Rand 10 eines Verdeckstoffes 11 des Kraftfahrzeugs hinein. Innerhalb der Aufnahmeöffnung 9 ist ferner eine Riegelleiste 13 angeordnet, die mit einer Naht 12 mit dem Rand 10 vernäht ist. Die Riegelleiste 13 wirkt mit dem zweiten Vorsprung 8 zur formschlüssigen Verriegelung des Randes 10 in der Aufnahmeöffnung 9 zusammen.

Der Profilfuß 2 weist eine von dem Halteschenkel 5 abgewandte Haltefläche 14 auf, an welcher der Rand 10 anliegt. An der der Haltefläche 14 gegenüberliegenden Seite ist der Strukturteil 4 mit zwei Längsrippen 15 versehen, die in dem montierten Zustand gemäß Fig. 1 an dem ersten Vorsprung 6 anliegen und unerwünschte Relativbewegungen zwischen dem Dichtungsprofil 1 und dem Rand 10 einerseits sowie dem Karosserieteil 7 andererseits mindern.

Zur Montage in den in Fig. 1 gezeigten Endzustand kann man zunächst den Rand 10 in die. Aufnahmeöffnung 9 einbringen und danach den Profilfuß 2 in einer Einsteckrichtung 16 in die Aufnahmeöffnung 9 einstecken. Dabei wird auf der Höhe der Vorsprünge 6, 8 der Halteschenkel 5 an den Strukturteil 4 angeklappt. Oberhalb des ersten Vorsprungs 6 federt sodann der Halteschenkel 5 in seine in Fig. 1 gezeigte entspannte Lage, in welcher er eine formschlüssige Verriegelung mit dem ersten Vorsprung 6 bildet.

Zur Montage in den in Fig. 1 gezeigten Endzustand kann andererseits auch so vorgegangen werden, daß zunächst außerhalb der Aufnahmeöffnung 9 der Rand 10 an die Haltefläche 14 angelegt und danach diese Einheit durch die Verengung zwischen den Vorsprüngen 6, 8 in die Aufnahmeöffnung 9 eingesteckt wird.

In Fig. 2 sind gleiche Teile wie in Fig. 1 mit gleichen Bezugszahlen versehen.

Gemäß Fig. 2 besteht die Riegelleiste 13 aus Kunststoff und ist mit dem Rand 10 verklebt. Anstelle der Längsrippen 15 ist in Fig. 2 an dem Strukturteil 4 eine Reibfläche 17 ausgebildet, die in dem montierten Zustand gemäß Fig. 2 unter Reibschluß an dem ersten Vorsprung 6 anliegt. Die Riegelleiste 13 stützt sich an dem zweiten Vorsprung 8 ab.
Der zweite Vorsprung 8 ist außerdem mit einer scharfen Kante 18 ausgebildet, die zusätzliche Sicherheit gegen ein Herausziehen des Verdeckstoffes 11 aus der Aufnahmeöffnung 9 bietet.

## Patentansprüche

1. Dichtungsprofil (1) für ein Kraftfahrzeug,
mit einem Profilfuß (2) zur Befestigung durch Einstecken in eine Aufnahmeöffnung (9) eines Karosserieteils (7) des Kraftfahrzeugs.
und mit einem elastischen Dichtungsabschnitt (3),
wobei der Profilfuß (2) einen Strukturteil (4) und einen mit dem Strukturteil (4) einstückig ausgebildeten Halteschenkel (5) aufweist,
wobei der Halteschenkel (5) zum Hintergreifen eines ersten Vorsprungs (6) an dem Karosserieteil (7) sowie in Richtung auf den Strukturteil (4) rückfedernd anklappbar ausgebildet ist,
wobei der Profilfuß (2) eine von dem Halteschenkel (5) abgewandte Haltefläche (14) aufweist,
wobei der Haltefläche (14) ein Rand (10) eines Verdeckstoffes (11) eines Verdecks des Kraftfahrzeugs gegenüberliegt.
wobei daß die Haltefläche (14) zumindest annähernd parallel zu einer Einsteckrichtung (16) des Profilfußes (2) verläuft,
wobei dem ersten Vorsprung (6) im Abstand ein zweiter Vorsprung (8) an dem Karosserieteil (7) gegenüberliegt.
wobei an der von der Haltefläche (14) abgewandten Seite des Randes (10) des Verdeckstoffes (11) eine Riegelleiste (13) befestigt ist,
und wobei die Riegelleiste (13) in der Aufnahmeöffnung (9) angeordnet ist und den zweiten Vorsprung (8) hintergreift,
**dadurch gekennzeichnet, daß** der elastische Dichtungsabschnitt (3) an dem Profilfuß (2) befestigt ist.

2. Dichtungsprofil nach Anspruch 1,
**dadurch gekennzeichnet, daß** die Riegelleiste (13) an den Rand (10) des Verdeckstoffes (11) angeklebt ist.

3. Dichtungsprofil nach Anspruch 1 oder 2.
**dadurch gekennzeichnet. daß** die Riegelleiste (13) aus Hartgummi besteht.

4. Dichtungsprofil nach einem der Ansprüche 1 bis 3,
**dadurch gekennzeichnet, daß** der Strukturteil (4) wenigstens eine an dem ersten Vorsprung (6) anliegende Längsrippe (15) aufweist.

5. Dichtungsprofil nach einem der Ansprüche 1 bis 4,
**dadurch gekennzeichnet, daß** der Profilfuß (2) aus Weichgummi und der Dichtungsabschnitt (3) aus Moosgummi koextrudiert sind.

## Claims

1. Sealing profile (1) for a motor vehicle,
having a profile base (2) for attachment by insertion into a receiving orifice (9) of a bodywork part (7) of the vehicle,
and having an elastic sealing portion (3),
wherein the profile base (2) comprises a structural part (4) and a holding limb (5) which is formed as one piece with the structural part (4),
wherein the holding limb (5) if formed for the purpose of engaging behind a first projection (6) on the bodywork part (7) and is formed in such a manner as to be able to fold in a resilient manner in the direction of the structural part (4),
wherein the profile base (2) comprises a holding surface (14) facing away from the holding limb (5),
wherein an edge (10) of a top fabric (11) of a motor vehicle top lies opposite the holding surface (14),
wherein the holding surface (14) extends at least approximately in parallel with an insertion direction (16) of the profile base (2),
wherein a second projection (8) on the bodywork part (7) lies opposite the first projection (6) at a spacing,
wherein a locking strip (13) is attached to the side of the edge (10) of the top fabric (11) facing away from the holding surface (14),
and wherein the locking strip (13) is disposed in the receiving orifice (9) and engages behind the second projection (8),
**characterised in that** the elastic sealing portion (3) is attached to the profile base (2).

2. Sealing profile according to claim 1,
**characterised in that** the locking strip (13) is adhered to the edge (10) of the top fabric (11).

3. Sealing profile according to claim 1 or 2,
**characterised in that** the locking strip (13) consists of hard rubber.

4. Sealing profile according to any one of the claims 1 to 3,
**characterised in that** the structural part (4) comprises at least one longitudinal rib (15) lying against the first projection (6).

5. Sealing profile according to any one of the claims 1 to 4,
**characterised in that** the profile base (2) is co-extruded from dense rubber and the sealing portion (3) is co-extruded from cellular rubber.

## Revendications

1. Profilé d'étanchéité (1) pour un véhicule à moteur,
comportant un pied de profilé (2) pour la fixation par emboîtage dans une ouverture de réception (9) d'une partie de carrosserie (7) du véhicule à moteur,
et une partie d'étanchéité élastique (3), le pied de profilé (2) présentant une partie structurelle (4) et une branche de maintien (5) formée d'une seule pièce avec la partie structurelle (4),
la branche de maintien (5) étant formée pour saisir par derrière une première partie en saillie (6) sur la pièce de carrosserie (7) ainsi que de manière à pouvoir basculer avec rappel élastique direction de la partie structurelle (4),
le pied de profilé (2) comportant une surface de maintien (14) opposée à la branche de maintien (5),
un bord (10) d'une matière (11) de capote d'une capote du véhicule à moteur étant opposée à la surface de maintien (14),
la surface de maintien (14) étant au moins à peu près parallèle à une direction d'emboîtage (16) du pied de profilé (2),
une deuxième pièce en saillie (8) étant opposée à distance de la première pièce en saillie (6) sur la partie de carrosserie (7),
une baguette de verrouillage (13) étant fixée sur le côté opposé à la surface de maintien (14) du bord (10) de la matière (11) de la capote,
et la baguette de verrouillage (13) étant placée dans l'ouverture de réception (9) et saisissant par derrière la deuxième pièce en saillie (8),
**caractérisée en ce que** la partie d'étanchéité élastique (3) est fixée au pied de profilé (2).

2. Profilé d'étanchéité de selon la revendication 1,
**caractérisé en ce que** la baguette de verrouillage (13) est collée au bord (10) de la matière (11) de la capote.

3. Profilé d'étanchéité selon la revendication 1 ou 2,
**caractérisé en ce que** la baguette de verrouillage (13) est en caoutchouc dur.

4. Profilé d'étanchéité selon l'une des revendications 1 à 3,
**caractérisé en ce que** la partie structurelle (4) comporte au moins une nervure longitudinale (15) s'appuyant sur la première pièce en saillie (6).

5. Profilé d'étanchéité selon l'une des revendications 1 à 4,
**caractérisé en ce que** le pied de profilé (2) en caoutchouc mou et la partie d'étanchéité (3) en caoutchouc spongieux sont coextrudés.
